# EUROPEAN PATENT SPECIFICATION

(11) **EP 2 090 798 B1**
(45) Date of publication and mention of the grant of the patent: **13.04.2011**
(21) Application number: 09152927.1
(22) Date of filing: 16.02.2009
(51) Int. Cl.: F16D 65/12, F16D 66/02

(54) **Brake disk, brake system and vehicle**
Bremsscheibe, Bremssystem und Fahrzeug
Disque de frein, système de frein et véhicule

(30) Priority: 14.02.2008 BR 8001901
(43) Date of publication of application: 19.08.2009
(73) Proprietor: Volkswagen do Brasil Indústria de Veiculos Automotores Ltda., 09772-040 Sao Bernardo do Campo (BR)
(72) Inventor: Sciré Junior, Carlos, 04634-011, Sao Paulo (BR); Sintram, Ulf, 04602-002, Sao Paulo (BR); Lopes de Almeida, Alexandre, 02521-080, Cotia (BR); Hohmann, Kai, 04735-004, Sao Paulo (BR)
(74) Representative: Benedum, Ulrich Max

(56) References cited:
- DE-A1- 2 749 772
- DE-U1- 9 403 747
- US-B1- 6 308 803

## Description

The present invention relates to a brake disk having a pad wear warning indicator, particularly for brake systems, a brake system comprising a brake disk, particularly for use in automotive vehicles, and to vehicles comprising a disk and brake system.

### Description of the state of the art

The brake disks are parts that make up the brake systems of various means that have translatory or even rotational movement and which require speed reduction. Usually, brake disks are associated to machines that perform movement and that often require positioning precision and stoppage, without causing shocks or damage. In the case of a vehicle, brake disks are operatively associated to any wheels of the automobile, and, accordingly, turn at the same speed as said wheels.

To brake the vehicle, it is necessary to apply attrition between a non-rotary element of the vehicle, called friction pad (also known as brake pad), and the disk or rotor that turns with the wheel. This attrition produces the force necessary to reduce the speed of the automobile. The attrition deriving from the action of the pads on the brake disk causes wear on these elements, especially on the pad, which is made of less resistant material than the brake disk. Accordingly, it is necessary to check the wear of these parts from time to time so that, as need be, a predictive maintenance for the vehicle can be scheduled, particularly because disks are an integral part of the brake system, which is a compulsory safety item.

Friction pads have a warning device to indicate wear comprising a metal element that comes into attrition with the brake disk when it becomes over reduced at the height of the pad profile, producing a loud and annoying sound indicated that the pads need to be changed. Additionally, there is also an opening for inspection of the pincer in order to check how much attrition materials still remain on the friction pads. The wear level indicator of the brake disks consist of grooves, impressions or holes made on the surface of the disk that enter into direct contact with the friction pad. Normally these holes, grooves or impressions have a certain depth that diminishes as the disk wears.

However, the wear level indication system of currently known brake disks has drawbacks that will be addressed ahead. These holes are conventionally positioned in a same region of the brake disk, and the only aspect that varies is the positioning angle between them (in the event of a plurality of holes). The main drawback of this currently known configuration is the fact that the wear is concentrated in a single zone of the friction disk, causing irregular wear, which compromises its working, consequently the efficiency of the braking system and, primarily, the vehicle's driver's safety.

Additionally, the symmetrical positioning of the holes on a same surface tends to give rise to noise resulting from the vibration of the brake disk, since the phase existing between the holes coincides with the disk vibration frequency mode, as well as the hole positioning symmetry hinders the visual examination of their extent of wear. With the aim of solving these drawbacks, the brake disk that is the object of the present invention was developed.
[0006A] DE-U-9403747, cf. preamble of present claim 1, discloses a braking system having opposing brake blocks which each engage on a ring-shaped friction face of a brake disc. At least one of the two friction faces of the brake disc has indentations with a depth corresponding to the maximum permissible wear of the friction surface. The indentations can be cast or mechanically formed. They can be arranged in several curved rows. The indentations can be cylindrical, conical or shaped like oblong holes.

### Objectives of the Invention

The objective of the present invention is to provide a brake disk that comprises a warning indicator that avoids wear of the friction pad in just one zone, providing regular and uniform wear that reduces the mechanical vibrations and also facilitates the visual inspection of the wear level of said brake disk.

The objective of the present invention is also to provide a brake system having a brake disk that (i) comprises a warning indicator that avoids wear of the friction pad in one zone only, favoring uniform and regular wear, besides reducing the mechanical vibrations and (ii) also facilitates the visual inspection of the wear level of said brake disk.

Lastly, the objective of the present invention is to provide a vehicle that comprises a brake system and a brake disk now proposed.

### Brief description of the invention

The present invention is defined in the attached independent claim to which reference should now be made. Further preferred features may be found in the sub-claims appended thereto.

The objectives of the present invention are achieved by a circular-shaped brake disk that comprises all of the features of present claim 1.

Advantages of the present invention include: (i) providing a uniform and regular wear of the friction pad that acts on the brake disk; (ii) reducing the mechanical vibrations imposed by the presence of the wear warning indicator; (iii) facilitating the visual inspection of the wear level of the brake disk, allowing the user of the vehicle to schedule possible predictive maintenance.

### Summarized description of the drawings

The present invention will now be described in more detail based on a sample embodiment represented in the drawings. The drawings show:
- Figure 1 -: a front view of the brake disk that is the object of the present invention;

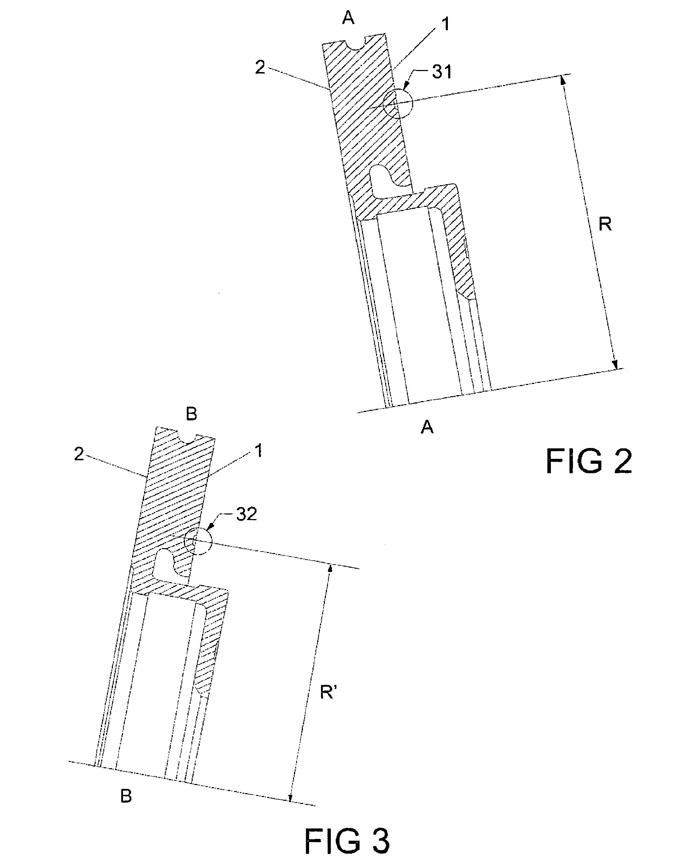

- Figure 2 -: is a cut view of the brake disk that is the object of the present invention, highlighting the first recess;
- Figure 3 -: a detailed view of the second recess;

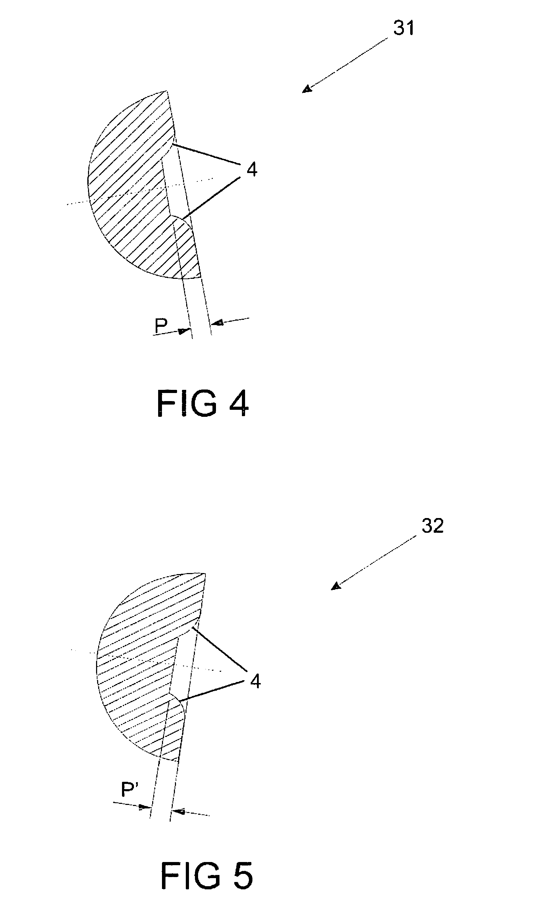

- Figure 4 -: a detailed view of the first recess; and
- Figure 5 -: a detailed view of the second recess.

### Detailed description of the drawings

Various systems having movement must ultimately attain a state of absolute repose. Accordingly, the effect of the inertia that the system has should be inferior to the resistance that this system needs to overcome in order to keep itself in movement.

In some cases, the inertia that a system attains is quickly overcome by the force of resistance to movement, implying in natural deceleration. However, in other situations, as in the case of automobiles, the inertia of the vehicle is so great that it needs a braking system to impose deceleration.

For the vehicle to brake, it is necessary to apply a resistance to the movement on a continuous basis, by means of attrition between the vehicle's non-rotary element and an element that turns solidarily with the wheel, as the brake disk or rotor. Brake disks are an integral part of brake systems of various means that have translatory or rotational movement and that require speed reduction and eventual stoppage.

Brake disks are associated to machines that perform movement and that require speed reduction, positioning precision and subsequent stoppage, without generating shocks or damage to the machine. For example, in the case of a vehicle, the brake disks are solidary to the drive wheels, and, accordingly, turn at the same speed as said wheels.

The attrition imposed produces the force necessary to reduce the speed of the automobile and converts all the mechanical energy resulting from the inertia of the vehicle in the form of heat, which is dissipated in the air. In some situations, the heat generated during braking is so intense that it can be noted that the brake disk appears to be incandescent, especially in cars that attain high speeds.

By virtue of the heat generated when applying the brakes of a vehicle, some brake disk configurations have a cooling system comprised of channels disposed radially which allow the air inside the brake disk. The presence of these channels increases the disk contact area with the atmospheric air, besides increasing the speed of the air flow that passes inside these channels, favoring the rapid thermal exchange between the atmospheric air and the disk, cooling it efficiently and avoiding the occurrence of deformations that compromise the workings of the brake system and the driver's safety.

This non-rotary element that is part of the brake system is called friction pad (or brake pad) and is responsible for frictioning the brake disk, causing brakeage until a complete stop, as convenient. Each brake disk uses one pair of pads.

Brake pads are enveloped by a part in the shape of a caliper, which is also part of the vehicle's brake system. The calipers make the brake pads friction the disk by means of a hydraulic circuit that is also part of the brake system, comprising pistons and cylinders.

Over time, the friction or attrition of the action of the pads against the brake disk in movement causes wear of these parts, especially of the pad, which is made of a less resistant material than the brake disk. The fact that the friction pad degrades more quickly than the disk makes the vehicle maintenance more viable, since the brake disks are more expensive parts than the pads.

Accordingly, it is necessary to perform a periodic check of the level of wear of the combination formed by the disks and pads ultimately for scheduling a predictive maintenance of the vehicle, even more so because it is a compulsory safety item. To facilitate inspection of the level of wear of these more critical parts, which constantly undergo the action of attrition forces, wear level warning indicators were devised. The most common indicators are of the visual kind, mainly used in the brake disks, and the sound indicators, which are applied to the friction pads.

The friction pads have a wear level indicator device comprised of a metallic component that comes into direct contact with the brake disk when the height of the pad profile becomes over reduced. This contact produces a loud and annoying sound, easily identified by the driver, indicating that the pads are already worn and need to be changed. Besides this type of indicator, there are others such as, for example, an opening for inspection in the pincer in order to check how much attrition material still remains on the friction pads. There is also the indicator on the panel of the vehicle which is based on the quantity of brake fluid needed to activate the brakes.

The wear level indicator of the brake disks consist of grooves, impressions or holes made on the surface of the disk that enter into direct contact with the friction pad. Normally these depressions have a certain depth that diminishes as the disk wears.

As described in the state of the art, the warning system that indicates the level of wear of the brake disks or rotors currently known has various drawbacks:
(i) concentrates the wear of the pad in a single region;
(ii) favors the vibration of the brake disk; and
(iii) causes irregular wear of the disk.

These drawbacks ultimately compromise the efficiency of the brake disks and the entire braking system, and mainly, the vehicle driver's safety.

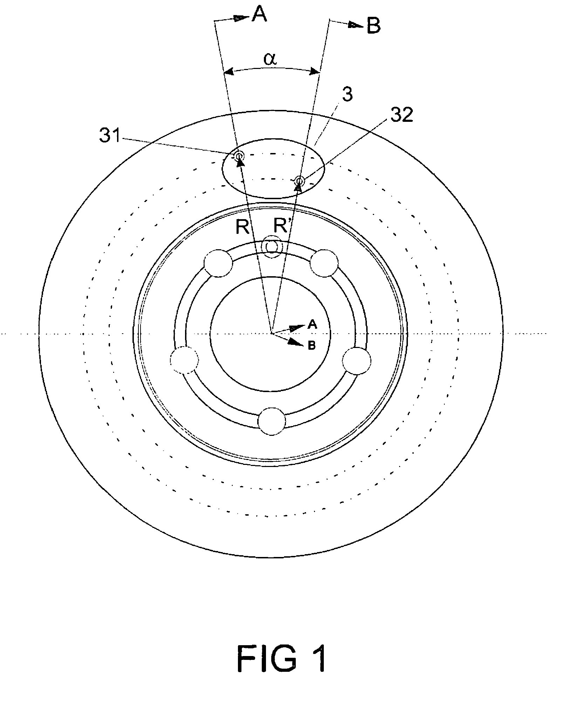

According to a preferred embodiment and as can be seen in figure 1, in order to remedy these problems, a brake disk or rotor was developed that comprises a wear indicator 3 that has the following benefits: (i) avoids wear of the friction pad in just one zone, providing regular and uniform wear; (ii) reduces the mechanical vibrations of the brake disk; and (iii) facilitates visual inspection of the level of wear.

The brake disk that is the object of the present invention is circular in shape and also comprises a first contact surface 1 and a second contact surface 2. This brake disk has a wear indicator 3 in the form of a recess, comprising at least two recesses 31 and 32, wherein the first recess 31 is positioned at a distance that comprises a first brake disk radius R and the second recess 32 is positioned at a distance that comprises a second brake disk radius R', wherein the at least two recesses 31 and 32 are arranged asymmetrically in relation to said disk.

Recesses 31 and 32 are preferably, but not compulsorily, circular depressions and not cut out. These recesses 31 and 32 are also preferably throat-shaped (diameter of the bottom of the recess greater than the diameter of the neck of the recess) and a rounded neck 4, in order to avoid sharp edges on its margins, which are veritable nuisances because they act as blades, damaging the brake pad that acts on said hole.

The recesses (31,32) are arranged on a same brake disk surface 1 and 2 and have different depths P and P', the first recess 31 comprising a first depth P and the second recess 32 comprising a second depth P', such that the shallower recess 31 is positioned in the greater positioning radius R and the deeper recess 32, in the lesser radius R'. Said difference in depth is justified by the fact that since the disk sustains radial wear, the shallower hole 31 P will disappear before the deeper P' hole 32 , facilitating the visual inspection.

Preferably, but not compulsorily, the brake disk that is the object of the present invention comprises two recesses, yet other embodiments comprising a greater number of recesses are admitted.

Brake disks in which the wear indicator has a plurality of radially-positioned recesses also comprise a cooling system, since a plurality of recesses increases the surface contact area 1 and 2 of the disk with the atmospheric air, favoring a quicker and more efficient thermal exchange.

The positioning of the recesses 31 and 32 on the brake disk is a crucial factor in determining its vibration frequency and to avoid resonance noise in the brake combination (disk, pad and pincer). Resonance is a physical phenomenon in which it is possible to record the transfer of energy of one oscillating system to another, when the frequency of the former coincides with one of the frequencies of the latter.

The high frequency noise (over 2000 Hz) in brake systems, also known as "squeal", is perceived by users as a problem in the brake system, affecting the quality and satisfaction indices of the vehicle user. The high frequency noise in brake systems is the result of the coupling of two vibration modes of the brake components, such as disk, pad and pincer.

To avoid the occurrence of such a phenomenon, the brake disk now proposed has its recesses 31 and 32 asymmetrically positioned on surface 1 and 2 of said disk. This non-symmetry of the recesses 31 and 32 alters the disk vibration frequency, meaning that it does not coincide with the vibration frequency of the pincer and the pads.

Having described an example of a preferred embodiment, it should be understood that the scope of the present invention encompasses other potential variations, and is only limited by the content of the claims appended hereto.

## Claims

1. Circular-shaped brake disk comprising a first contact surface (1) and a second contact surface (2), said disk having at least two wear-indicating recesses (31, 32), the first recess (31) of a first recess depth (P) being positioned at a distance in accordance with a first brake disk radius (R) and the second recess (32) of a second recess depth (P') being positioned at a distance in accordance with a second brake disk radius (R') and the at least two recesses (31,32) being arranged asymmetrically in relation to said disk,
**characterized in that** the shallower recess (P) is positioned in the greater positioning radius (R) and the deeper recess (P') is positioned in the lesser positioning radius (R').

2. Brake disk in accordance with claim 1, **characterised in that** each recess (31, 32) comprises a rounded neck (4).

3. Brake disk in accordance with claim 1 or claim 2, **characterised in that** the recess neck (4) defines a circular shape.

4. Brake disk according to any of claims 1 to 3, **characterised in that** two consecutive recesses (31,32) comprise a positioning angle (α).

5. Brake disk according to any of claims 1 to 4, **characterised in that** each recess (31, 32) is throat-shaped.

6. Brake disk according to any of claims 1 to 5, **characterised in that** the recesses (31, 32) are arranged on a same brake disk surface (1, 2).

7. Brake disk according to any of claims 1 to 6, **characterised by** comprising a plurality of radially-positioned recesses.

8. Brake disk according to any of claims 1 to 7, **characterised in that** the plurality of recesses (31,32) comprises a cooling system.

9. Brake system **characterised by** having a circular-shaped brake disk in accordance with any of claims 1-8.

10. Vehicle comprising a brake system as defined in claim 9.

## Patentansprüche

1. Kreisförmige Bremsscheibe, umfassend eine erste Reibungsfläche (1) und eine zweite Reibungsfläche (2), wobei die Scheibe mindestens zwei die Abnutzung anzeigende Vertiefungen (31, 32) aufweist, wobei die erste Vertiefung (31) mit einer ersten Tiefe (P) in einer Entfernung gemäß einem ersten Bremsscheibenradius (R) angeordnet ist, und die zweite Vertiefung (32) mit einer zweiten Tiefe (P') in einer Entfernung gemäß einem zweiten Bremsscheibenradius (R') angeordnet ist, und die mindestens zwei Vertiefungen (31, 32) asymmetrisch gegenüber der Scheibe angeordnet sind,
**dadurch gekennzeichnet, dass** die flachere Vertiefung (P) im größeren Anordnungsradius (R) angeordnet ist, und die tiefere Vertiefung (P') im kleineren Anordnungsradius (R') angeordnet ist.

2. Bremsscheibe gemäß Anspruch 1, **dadurch gekennzeichnet, dass** jede Vertiefung (31, 32) einen abgerundeten Hals (4) umfasst.

3. Bremsscheibe gemäß Anspruch 1 oder Anspruch 2, **dadurch gekennzeichnet, dass** der Vertiefungshals (4) eine Kreisform beschreibt.

4. Bremsscheibe gemäß irgendeinem der Ansprüche 1 bis 3, **dadurch gekennzeichnet, dass** zwei aufeinander folgende Vertiefungen (31, 32) einen Positionswinkel (α) umfassen.

5. Bremsscheibe gemäß irgendeinem der Ansprüche 1 bis 4, **dadurch gekennzeichnet, dass** jede Vertiefung (31, 32) die Form einer Auskragung hat.

6. Bremsscheibe gemäß irgendeinem der Ansprüche 1 bis 5, **dadurch gekennzeichnet, dass** die Vertiefungen (31, 32) auf der gleichen Bremsscheibenoberfläche (1, 2) angeordnet sind.

7. Bremsscheibe gemäß irgendeinem der Ansprüche 1 bis 6, **dadurch gekennzeichnet, dass** sie eine Anzahl radial angeordneter Vertiefungen umfasst.

8. Bremsscheibe gemäß irgendeinem der Ansprüche 1 bis 7, **dadurch gekennzeichnet, dass** die Anzahl Vertiefungen ein Kühlsystem (31, 32) umfassen.

9. Bremssystem, **dadurch gekennzeichnet, dass** es eine kreisförmige Bremsscheibe nach den Ansprüchen 1 bis 8 aufweist.

10. Fahrzeug, umfassend ein Bremssystem, wie in Anspruch 9 beschrieben.

## Revendications

1. Disque de frein de forme circulaire comprenant une première surface de contact (1) et une seconde surface de contact (2), ledit disque ayant au moins deux retraits indicateurs d'usure (31, 32), le premier retrait (31) d'une première profondeur de retrait (P) étant positionné à une distance conformément à un premier rayon de disque de frein (R) et le second retrait (32) d'une seconde profondeur de retrait (P') étant positionné à une distance conformément à un second rayon de disque de frein (R') et les au moins deux retraits (31, 32) étant agencés asymétriquement par rapport audit disque,
**caractérisé en ce que** le retrait le moins profond (P) est positionné dans le rayon de positionnement le plus grand (R) et le retrait le plus profond (P') est positionné dans le rayon de positionnement moindre (R').

2. Disque de frein selon la revendication 1, **caractérisé en ce que** chaque retrait (31, 32) comprend un col arrondi (4).

3. Disque de frein selon la revendication 1 ou la revendication 2, **caractérisé en ce que** le col de retrait (4) définit une forme circulaire.

4. Disque de frein selon l'une quelconque des revendications 1 à 3, **caractérisé en ce que** deux retraits consécutifs (31, 32) comprennent un angle de positionnement (α).

5. Disque de frein selon l'une quelconque des revendications 1 à 4, **caractérisé en ce que** chaque retrait (31, 32) est en forme de gorge.

6. Disque de frein selon l'une quelconque des revendications 1 à 5, **caractérisé en ce que** les retraits (31, 32) sont agencés sur une même surface de disque de frein (1, 2).

7. Disque de frein selon l'une quelconque des revendications 1 à 6, **caractérisé par** le fait de comprendre une pluralité de retraits positionnés radialement.

8. Disque de frein selon l'une quelconque des revendications 1 à 7, **caractérisé en ce que** la pluralité de retraits (31, 32) comprend un système de refroidissement.

9. Système de frein **caractérisé par** le fait d'avoir un disque de frein de forme circulaire selon l'une quelconque des revendications 1 à 8.

10. Véhicule comprenant un système de frein tel que défini dans la revendication 9.
